# EUROPEAN PATENT APPLICATION

(11) **EP 4 080 463 A1**
(43) Date of publication of application: **26.10.2022**
(21) Application number: 20901821.7
(22) Date of filing: 04.12.2020
(51) Int. Cl.: G06T 19/00, H04N 5/66

(54) **INFORMATION PROCESSING DEVICE, INFORMATION PROCESSING METHOD, AND RECORDING MEDIUM**

(30) Priority: 19.12.2019 JP 2019229315
(71) Applicant: Sony Group Corporation, Tokyo 108-0075 (JP)
(72) Inventor: SUGIHARA, Kenji, Tokyo 108-0075 (JP)
(74) Representative: MFG Patentanwälte Meyer-Wildhagen Meggle-Freund Gerhard PartG mbB
(86) International application number: PCT/JP2020/045173
(87) International publication number: WO 2021/124920

(57) **Abstract**

The present disclosure relates to an information processing apparatus that enables provision of a more natural viewing experience to a user, an information processing method, and a recording medium.

A control unit controls display of a two-dimensional image including a plurality of objects having distance information in a three-dimensional coordinate system with a viewpoint position of a user as a reference. The control unit controls a display magnification of the two-dimensional image corresponding to a movement amount of the viewpoint position in a real space on the basis of distance information of the objects that is a region of interest of the user. The present disclosure can be applied to, for example, an HMD that presents an omnidirectional image.

## Description

### TECHNICAL FIELD

The present disclosure relates to an information processing apparatus, an information processing method, and a recording medium, and in particular, to an information processing apparatus that enables provision of a more natural viewing experience to a user, an information processing method, and a recording medium.

### BACKGROUND ART

A conventional technology of providing a virtual reality (VR) experience with a high immersive feeling by displaying an image of a virtual space on a head mounted display (HMD) worn on the head of a user is known.

Patent Document 1 discloses a technology of presenting a graphical user interface (GUI) for performing zoom control of a predetermined region in a virtual space.

### CITATION LIST

### PATENT DOCUMENT

Patent Document 1: Japanese Patent Application Laid-Open No. 2019-139673

### SUMMARY OF THE INVENTION

### PROBLEMS TO BE SOLVED BY THE INVENTION

In a VR experience, it is desirable to provide a natural user interface (NUI) instead of the GUI. For example, it is desirable that a forward and backward movement of a user in a real space is reflected in zoom control of an object in a virtual space.

In the VR experience, for example, in a case where a two-dimensional image such as an omnidirectional image is projected three-dimensionally, a viewing experience of three degrees of freedom (3DoF) reflecting rotation of a viewpoint (head) of the user is provided. However, in the two-dimensional image projected three-dimensionally, since a translational movement of the user's viewpoint in the front-back direction, the left-right direction, and the up-down direction is not reflected as in 6DoF, there is a possibility that the user feels uncomfortable.

The present disclosure has been made in view of such a situation, and an object thereof is to enable provision of a more natural viewing experience to a user who views a two-dimensional image projected three-dimensionally.

### SOLUTIONS TO PROBLEMS

An information processing apparatus of the present disclosure is an information processing apparatus including a control unit that controls display of a two-dimensional image including a plurality of objects having distance information in a three-dimensional coordinate system with a viewpoint position of a user as a reference, in which the control unit controls a display magnification of the two-dimensional image corresponding to a movement amount of the viewpoint position in a real space on the basis of the distance information of the objects that is a region of interest of the user.

An information processing method of the present disclosure is an information processing method including: by an information processing apparatus, controlling display of a two-dimensional image including a plurality of objects having distance information in a three-dimensional coordinate system with a viewpoint position of a user as a reference; and controlling a display magnification of the two-dimensional image corresponding to a movement amount of the viewpoint position in a real space on the basis of the distance information of the objects that is a region of interest of the user.

A recording medium of the present disclosure is a computer-readable recording medium in which a program is recorded, the program configured to cause execution of processing of: controlling display of a two-dimensional image including a plurality of objects having distance information in a three-dimensional coordinate system with a viewpoint position of a user as a reference; and controlling a display magnification of the two-dimensional image corresponding to a movement amount of the viewpoint position in a real space on the basis of the distance information of the objects that is a region of interest of the user.

In the present disclosure, display of a two-dimensional image including a plurality of objects having distance information is controlled in a three-dimensional coordinate system with a viewpoint position of a user as a reference, and a display magnification of the two-dimensional image corresponding to a movement amount of the viewpoint position in a real space is controlled on the basis of the distance information of the objects that is a region of interest of the user.

### BRIEF DESCRIPTION OF DRAWINGS

Fig. 1 is a diagram for explaining presentation of a two-dimensional image by a technology according to the present disclosure.
Fig. 2 is a diagram for explaining presentation of a two-dimensional image by a technology according to the present disclosure.
Fig. 3 is a diagram for explaining presentation of a two-dimensional image by a technology according to the present disclosure.
Fig. 4 is a diagram illustrating a configuration example of an image presentation system to which the technology according to the present disclosure is applied.
Fig. 5 is a diagram for explaining appearance of an image in the real world.
Fig. 6 is a diagram for explaining appearance of an image in an omnidirectional image.
Fig. 7 is a diagram illustrating an external configuration of an HMD according to the present embodiment.
Fig. 8 is a block diagram illustrating a hardware configuration example of the HMD.
Fig. 9 is a block diagram illustrating a functional configuration example of the HMD.
Fig. 10 is a flowchart for explaining first display processing of the omnidirectional image.
Fig. 11 is a diagram for explaining a change in a radius of the omnidirectional image.
Fig. 12 is a diagram for explaining a problem in the first display processing.
Fig. 13 is a flowchart for explaining second display processing of the omnidirectional image.
Fig. 14 is a diagram for explaining a movement of a center position of the omnidirectional image.
Fig. 15 is a diagram for explaining an expected movement of the center position of the omnidirectional image.
Fig. 16 is a diagram for explaining a problem in the second display processing.
Fig. 17 is a flowchart for explaining third display processing of the omnidirectional image.
Fig. 18 is a flowchart for explaining the third display processing of the omnidirectional image.
Fig. 19 is a diagram for explaining a movement of the center position of the omnidirectional image at a viewpoint position.
Fig. 20 is a block diagram illustrating a configuration example of a computer.

### MODE FOR CARRYING OUT THE INVENTION

Hereinafter, modes (hereinafter referred to as embodiments) for implementing the present disclosure will be described. Note that the description will be given in the following order.

1. Outline of technology according to the present disclosure
2. Presentation of omnidirectional image and problems thereof
3. Configuration of HMD
4. First display example of omnidirectional image
5. Second display example of omnidirectional image
6. Third display example of omnidirectional image
7. Computer configuration example

### <1. Outline of technology according to the present disclosure>

### (Presentation of two-dimensional image)

An image presentation system to which the technology according to the present disclosure (the present technology) is applied displays a two-dimensional image including a plurality of objects having distance information in a three-dimensional coordinate system with a viewpoint position of a user as a reference.

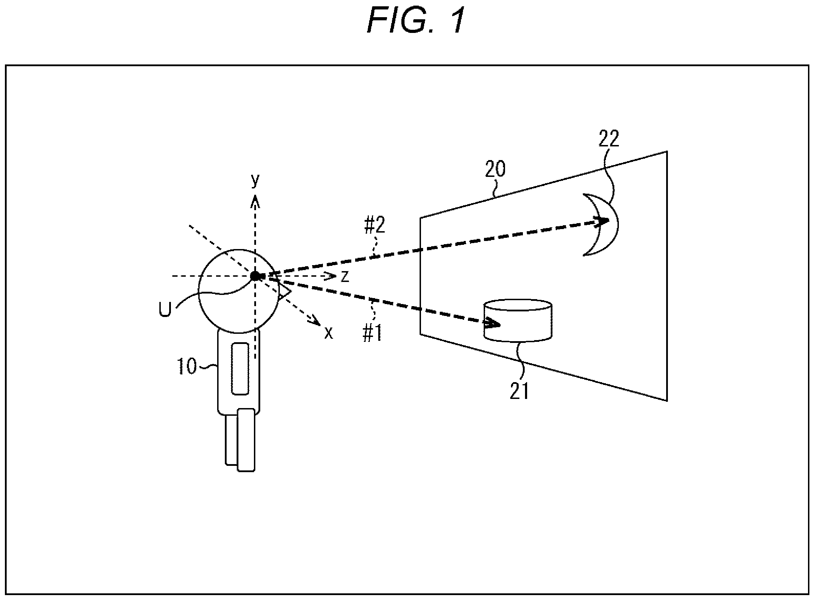

For example, as illustrated in Fig. 1, a two-dimensional image 20 is displayed at a position away from a viewpoint position U of a user 10 by a predetermined distance in an xyz coordinate system with the viewpoint position U of the user 10 as an origin. The two-dimensional image 20 is not a three-dimensional image including computer graphics (CG) data, but is, for example, an image obtained by three-dimensionally projecting two-dimensional data obtained by imaging the real world.

The two-dimensional image 20 includes a first object 21 and a second object 22. Each of the object 21 and the object 22 has distance information. The distance information corresponds to, for example, a real-world distance (actual distance) between a camera and each of the objects 21, 22 at the time of imaging of the two-dimensional image 20. In the example of Fig. 1, it is assumed that the object 22 exists at a position farther than the object 21 in the real world and has distance information larger than the object 21 in the two-dimensional image 20.

In the image presentation system to which the present technology is applied, the display magnification of the two-dimensional image 20 corresponding to a movement amount of the viewpoint position U of the user 10 in the real space is controlled on the basis of distance information of an object in front of the line-of-sight of the user 10. Specifically, a change amount of the display magnification of the two-dimensional image 20 corresponding to the movement amount of the viewpoint position U of the user 10 is made different between a case where the line-of-sight of the user 10 is on the object 21 as indicated by the arrow #1 in Fig. 1 and a case where the line-of-sight of the user is on the object 22 as indicated by the arrow #2.

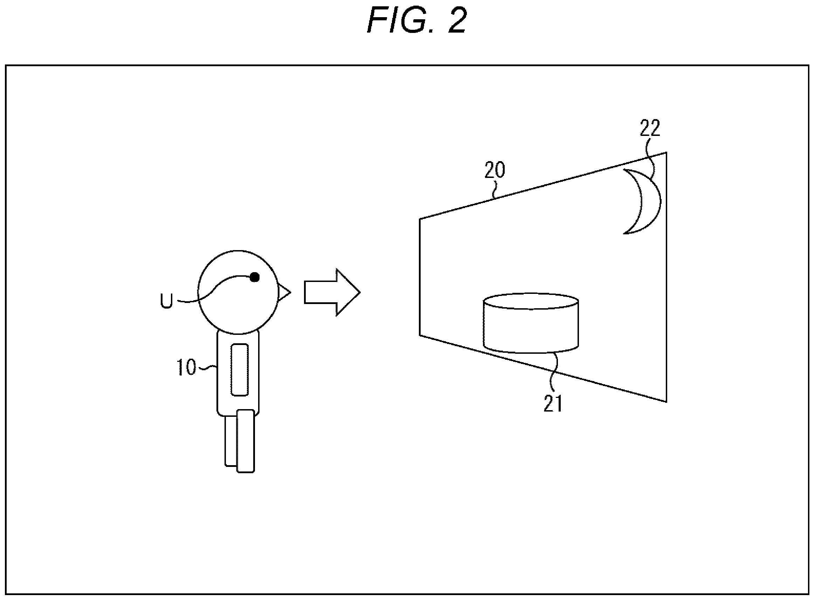

For example, in a case where the line-of-sight of the user 10 is on the object 21, as illustrated in Fig. 2, the two-dimensional image 20 is enlarged and displayed by the amount by which the viewpoint position U approaches the two-dimensional image 20.

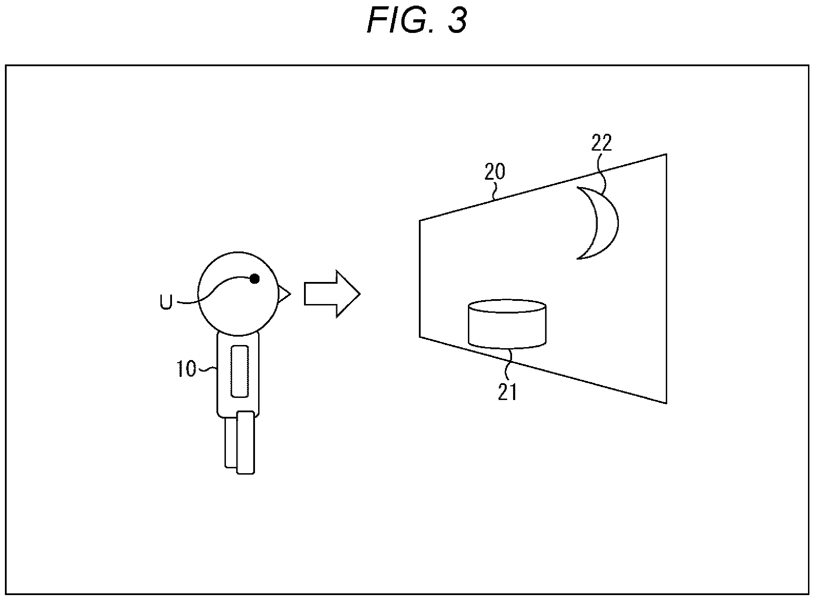

On the other hand, in a case where the line-of-sight of the user 10 is on the object 22, as illustrated in Fig. 3, the two-dimensional image 20 is enlarged and displayed by the amount by which the viewpoint position U approaches the two-dimensional image 20, and the change amount of the display magnification is smaller than that in the example of Fig. 2.

In the real world, in a case where the user moves forward by a certain distance, an object closer to the user looks larger, but the appearance of an object farther from the user does not change much.

In the image presentation system to which the present technology is applied, the change amount of the display magnification of the two-dimensional image 20 corresponding to the movement amount of the viewpoint position U is larger as the distance information of the object in front of the line-of-sight of the user 10 is smaller. On the other hand, the change amount of the display magnification of the two-dimensional image 20 corresponding to the movement amount of the viewpoint position U is smaller as the distance information of the object in front of the line-of-sight of the user 10 is larger. As a result, a more natural viewing experience close to the real world can be provided to the user 10 viewing the two-dimensional image 20.

### (Configuration example of image presentation system)

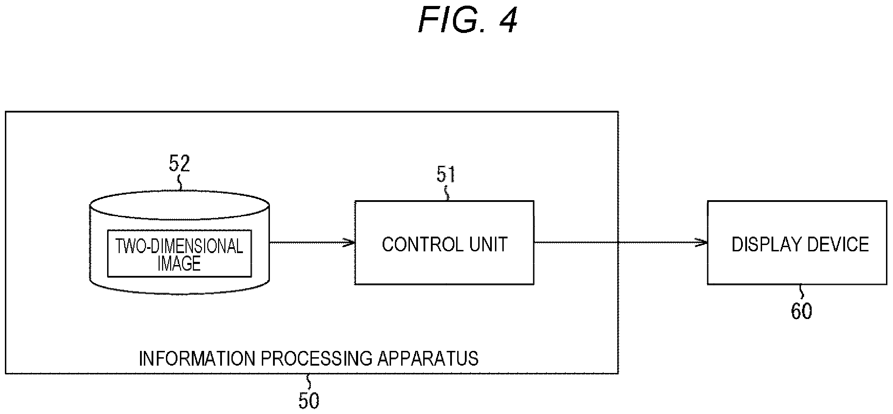

Fig. 4 is a block diagram illustrating a configuration example of an image presentation system that implements the above-described image presentation.

The image presentation system in Fig. 4 includes an information processing apparatus 50 and a display device 60.

The information processing apparatus 50 is configured as, for example, a personal computer (PC). The information processing apparatus 50 supplies a two-dimensional image obtained by imaging to the display device 60 that three-dimensionally projects the two-dimensional image. The display device 60 is configured as, for example, an HMD worn on the head of the user, and includes a non-transmissive display unit. A two-dimensional image is displayed on the display unit.

The information processing apparatus 50 includes a control unit 51 and a storage unit 52.

The control unit 51 controls display of the two-dimensional image stored in the storage unit 52 on the display device 60 in a three-dimensional coordinate system having the viewpoint position of the user as a reference. The storage unit 52 stores a two-dimensional image including a plurality of objects having distance information. The control unit 51 controls a display magnification of the two-dimensional image corresponding to a movement amount of the viewpoint position of the user in a real space on the basis of distance information of the object that is a region (region of interest) of interest of the user in the two-dimensional image displayed on the display device 60.

Note that, in Fig. 4, the information processing apparatus 50 is configured separately from the display device 60, but may be configured integrally with the display device 60.

In the image presentation system of Fig. 4, an omnidirectional image is presented as the two-dimensional image, but the present invention is not limited thereto, and for example, a 180-degree half celestial sphere image may be presented.

### <2. Presentation of omnidirectional image and problems thereof>

The omnidirectional image reproduces a 360-degree image captured by a 360-degree camera by fixing a positional relationship between the viewpoint position and a presentation surface. The omnidirectional image needs to be presented following the movement of the head even in a case where the user viewing the omnidirectional image moves the head. However, in a case where the user moves the head by approaching or looking into an object in the image at the time of viewing the omnidirectional image, the position of the omnidirectional image is fixed, and thus the appearance of the omnidirectional image does not match the appearance when the user moves the head in the real world.

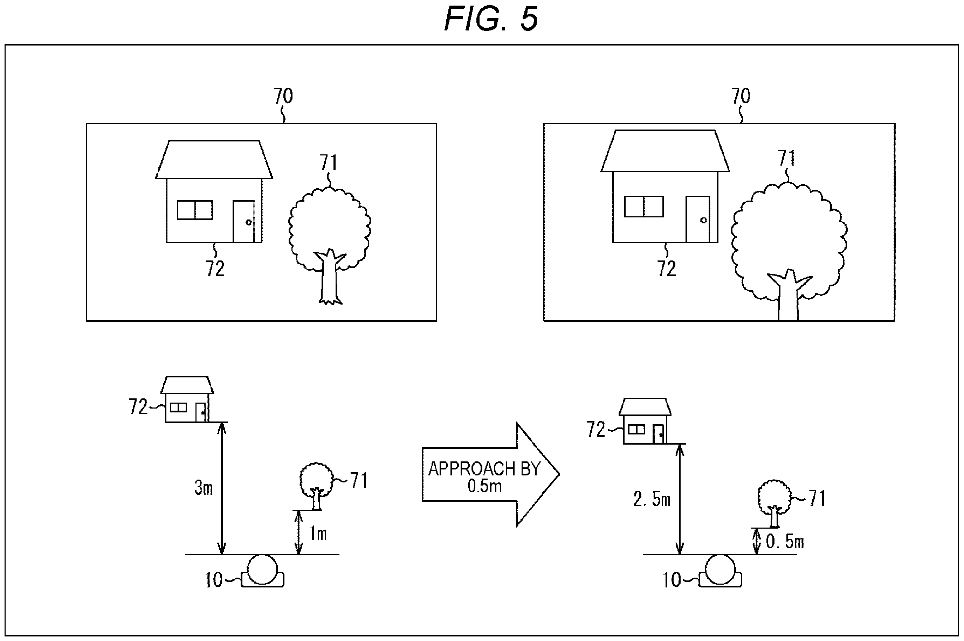

For example, as illustrated on the left side of Fig. 5, it is assumed that the user 10 looks at a tree 71 and a house 72 in a field of view 70 of the real world. The distance between the user 10 and the tree 71 is 1 m, and the distance between the user 10 and the house 72 is 3 m.

In a case where the user 10 moves forward by 0.5 m from the state on the left side of Fig. 5, as illustrated on the right side of Fig. 5, the distance between the user 10 and the tree 71 is 0.5 m, and the distance between the user 10 and the house 72 is 2.5 m. At this time, in the field of view 70 of the user 10, a nearby object (tree 71) looks large only by slightly approaching, while a distant object (house 72) does not change much in appearance even by slightly approaching. As described above, the appearance in the real world is affected by a change in distance as an object is closer.

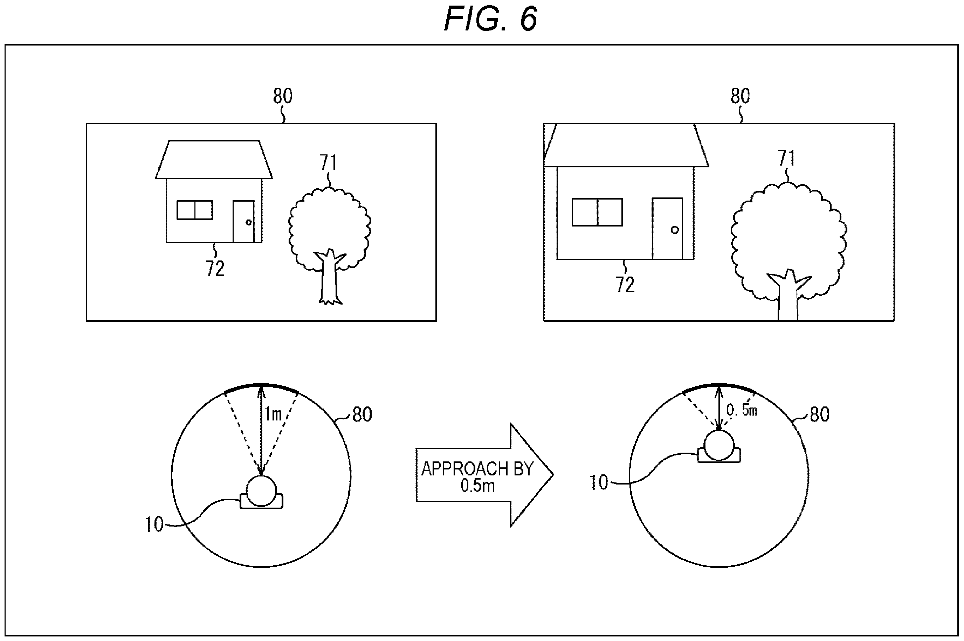

On the other hand, as illustrated on the left side of Fig. 6, it is assumed that the user 10 views the tree 71 and the house 72 in a viewing region 80 of an omnidirectional image. The distance (radius of the omnidirectional image) between the user 10 and the viewing region 80 is 1 m.

In a case where the user 10 moves forward by 0.5 m from the state on the left side of Fig. 6, the distance between the user 10 and the viewing region 80 is 0.5 m as illustrated on the right side of Fig. 6. At this time, in the viewing region 80 of the user 10, a nearby object (tree 71) looks large only by slightly approaching, and a distant object (house 72) also looks large only by slightly approaching. As described above, in the appearance in the omnidirectional image, all objects are equally affected by a change in distance.

In a case where the position of the omnidirectional image is fixed and the head of the user is moved, the appearance of the viewing region (the size and position of the image) changes depending on the distance between the viewpoint position and the presentation surface. For example, in a case where the actual distance between the camera and the object at the time of imaging the omnidirectional image matches the radius of the omnidirectional image, it matches the appearance when the head is moved in the real world. On the other hand, various objects having different actual distances from the camera are reflected in the omnidirectional image. Therefore, in a case where the radius of the omnidirectional image is adjusted to the actual distance of a specific object, it does not match the actual distance of other objects, and there is a possibility that the user feels uncomfortable.

Therefore, in the following, a configuration will be described in which a display magnification of an omnidirectional image corresponding to a movement amount of a viewpoint position (head) of a user is controlled by changing a radius of the omnidirectional image on the basis of distance information of the object that is a region of interest of the user in the omnidirectional image.

### <3. Configuration of HMD>

### (External configuration)

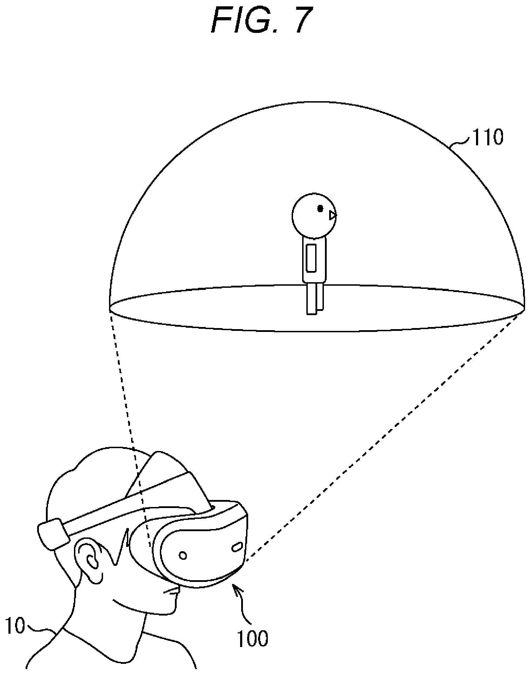

Fig. 7 is a diagram illustrating an external configuration of an HMD according to the present embodiment.

Fig. 7 illustrates an HMD 100 worn on the head of the user 10.

The HMD 100 is configured as a display device capable of displaying an omnidirectional image, and includes a non-transmissive display. An omnidirectional image 110 is displayed on the display.

A field of view (viewing region) of the user 10 in the omnidirectional image 110 is moved by the user 10 wearing the HMD 100 on the head changing the orientation of the head.

### (Hardware configuration example)

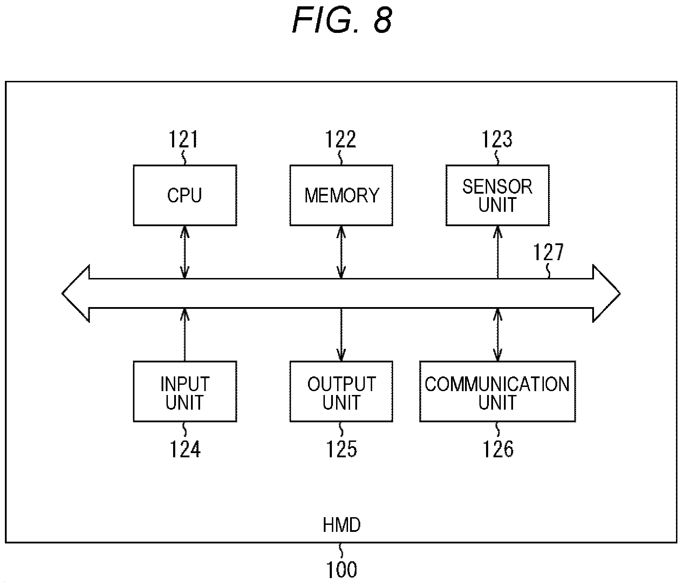

Fig. 8 is a block diagram illustrating a hardware configuration example of the HMD 100 according to the present embodiment.

The HMD 100 in Fig. 8 includes a central processor unit (CPU) 121, a memory 122, a sensor unit 123, an input unit 124, an output unit 125, and a communication unit 126. These are interconnected via a bus 127.

The CPU 121 executes processing for achieving various functions of the HMD 100 according to programs, data, and the like stored in the memory 122.

The memory 122 includes a storage medium such as a semiconductor memory or a hard disk, and stores programs and data for processing by the CPU 121.

The sensor unit 123 includes various sensors such as an image sensor, a microphone, a gyro sensor, and an acceleration sensor. Various types of sensor information acquired by the sensor unit 123 are also used for processing by the CPU 121.

The input unit 124 includes buttons, keys, a touch panel, and the like. The output unit 125 includes the above-described display, a speaker, and the like. The communication unit 126 is configured as a communication interface that mediates various types of communication.

### (Functional configuration example)

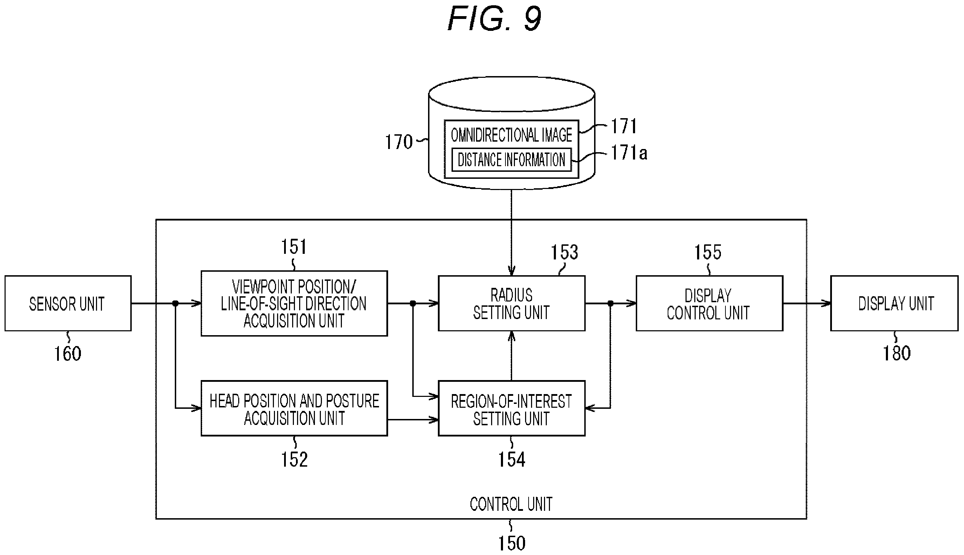

Fig. 9 is a block diagram illustrating a functional configuration example of the HMD 100.

The HMD 100 in Fig. 9 includes a control unit 150, a sensor unit 160, a storage unit 170, and a display unit 180. The sensor unit 160, the storage unit 170, and the display unit 180 correspond to the sensor unit 123, the memory 122, and the display constituting the output unit 125 in Fig. 8, respectively.

The control unit 150 includes a viewpoint position/line-of-sight direction acquisition unit 151, a head position and posture acquisition unit 152, a radius setting unit 153, a region-of-interest setting unit 154, and a display control unit 155. The functional blocks included in the control unit 150 are implemented by the CPU 121 in Fig. 8 executing a predetermined program.

The viewpoint position/line-of-sight direction acquisition unit 151 acquires a viewpoint position and a line-of-sight direction of the user 10 in a virtual space on the basis of a viewpoint position and a line-of-sight direction of the user 10 in the real space sensed by the sensor unit 160, and supplies the viewpoint position and the line-of-sight direction to the radius setting unit 153 and the region-of-interest setting unit 154.

The head position and posture acquisition unit 152 acquires a position and posture of the head of the user 10 in the virtual space on the basis of a position and posture of the head of the user 10 in the real space sensed by the sensor unit 160, and supplies the position and posture to the region-of-interest setting unit 154.

The radius setting unit 153 sets a radius of the omnidirectional image stored in the storage unit 170 on the basis of the viewpoint position of the user 10 acquired by the viewpoint position/line-of-sight direction acquisition unit 151. The omnidirectional image in which the radius is set is supplied to the region-of-interest setting unit 154 and the display control unit 155.

The storage unit 170 stores an omnidirectional image 171. The omnidirectional image 171 includes a plurality of objects having distance information 171a. The distance information 171a is depth data or the like acquired at the time of imaging the omnidirectional image.

The region-of-interest setting unit 154 sets a region of interest of the user 10 in the omnidirectional image having the radius set by the radius setting unit 153 on the basis of the line-of-sight direction of the user 10 acquired by the viewpoint position/line-of-sight direction acquisition unit 151. The set region of interest is supplied to the radius setting unit 153. The radius setting unit 153 sets a radius of the omnidirectional image on the basis of the distance information of the object that is the region of interest set by the region-of-interest setting unit 154 in the omnidirectional image.

The display control unit 155 causes the display unit 180 to display the omnidirectional image having the radius set by the radius setting unit 153.

Hereinafter, a display example of the omnidirectional image in the HMD 100 will be described.

### <4. First display example of omnidirectional image>

### (First display processing)

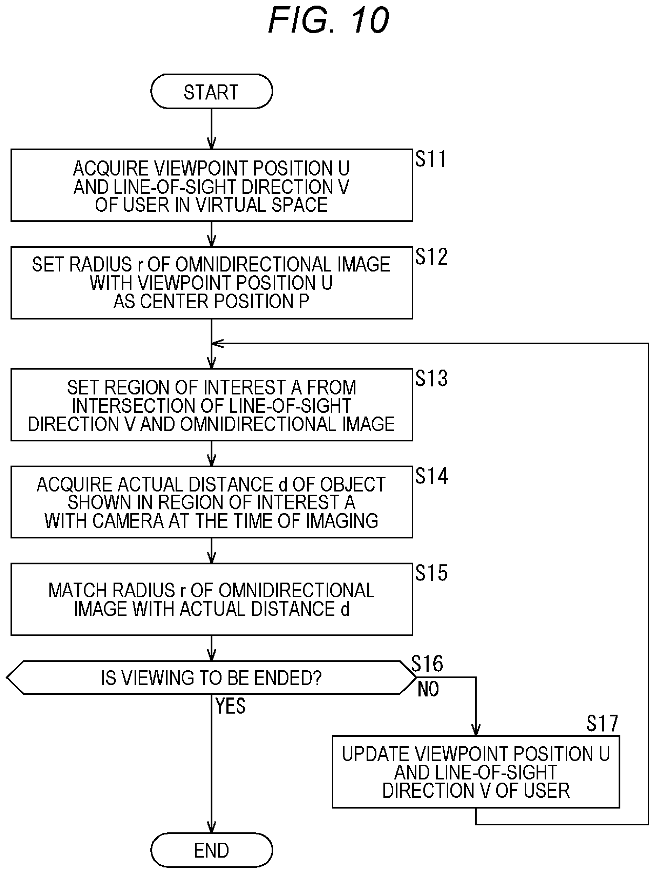

First, first display processing of an omnidirectional image will be described with reference to a flowchart in Fig. 10. The processing of Fig. 10 is performed when the user 10 wearing the HMD 100 on the head starts viewing the omnidirectional image.

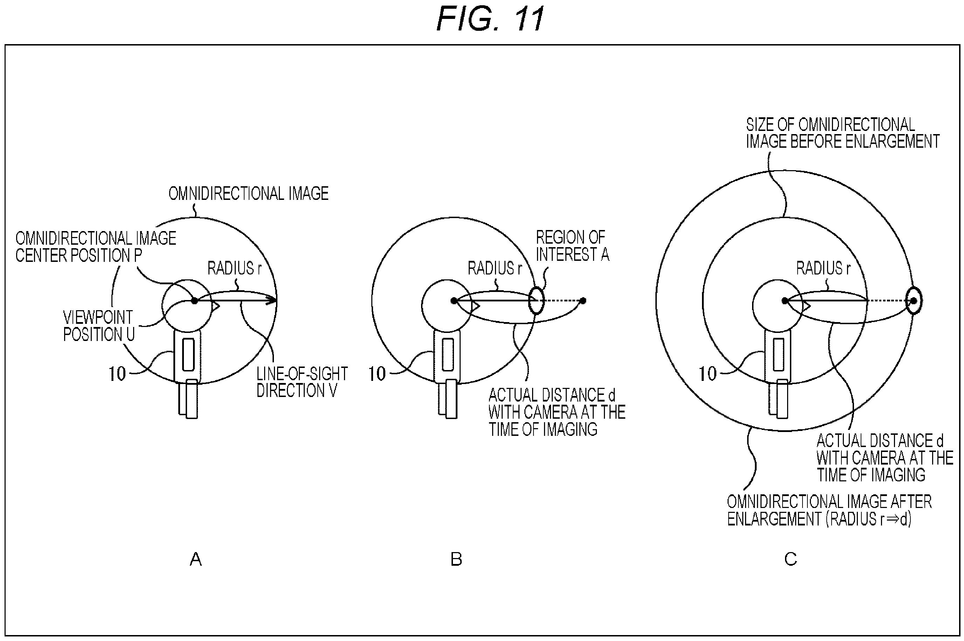

In step S11, as illustrated in A of Fig. 11, the viewpoint position/line-of-sight direction acquisition unit 151 acquires the viewpoint position U and a line-of-sight direction V of the user 10 in the virtual space.

The viewpoint position U of the user 10 may be a position of the HMD 100 in the real space or may be an intermediate position between binocular lenses included in the HMD 100. Furthermore, in a case where the eyeball positions of both eyes of the user 10 are estimated, the viewpoint position U may be an intermediate position of the eyeball positions of both eyes.

The line-of-sight direction V of the user 10 may be a median value of the line-of-sight directions of both eyes of the user 10 obtained by the line-of-sight detection device built in the HMD 100, or may be the line-of-sight direction of one eye in a case where only the line-of-sight direction of one eye can be obtained. Furthermore, the orientation of the face of the user 10 estimated from the position and posture of the head of the user 10 acquired by the head position and posture acquisition unit 152 may be the line-of-sight direction V of the user 10. Moreover, a direction input from a pointing device such as a VR controller operated by the user 10 may be set as the line-of-sight direction V of the user 10.

In step S12, as illustrated in A of Fig. 11, the radius setting unit 153 sets a radius r of the omnidirectional image with the viewpoint position U of the user 10 as a center position P so that the omnidirectional image has a viewable size. In other words, it is sufficient that the size of the omnidirectional image at the start of presentation is not a non-viewable size for the user 10. Examples of the non-viewable size include a size in which the diameter of the omnidirectional image is less than the distance between the two eyes of the user 10, and a size in which the radius of the omnidirectional image is outside the view clipping range or less than the shortest presentation distance of the HMD 100.

In step S13, as illustrated in B of Fig. 11, the region-of-interest setting unit 154 sets a region of interest A on the omnidirectional image from an intersection of the line-of-sight direction V of the user 10 and the omnidirectional image.

The region of interest A may be an intersection of the line-of-sight direction V and the omnidirectional image, or may be an object region showing an object including the intersection. The object region is obtained by specifying an object on the omnidirectional image using semantic segmentation, a visual saliency map, or the like. Furthermore, the object region may be obtained by acquiring depth data on the omnidirectional image using semantic segmentation or the like.

Furthermore, in a case where a virtual object is arranged in the omnidirectional image, when the line-of-sight direction V of the user 10 intersects with the virtual object arranged in the omnidirectional image instead of an object on the omnidirectional image, the display region of the virtual object may be set as the region of interest A.

Moreover, in a case where the convergence angle of both eyes is acquired, a search region including a depth may be set on the basis of the line-of-sight direction V and the convergence angle, and a region near the search region may be set as the region of interest A.

In step S14, as illustrated in B of Fig. 11, the radius setting unit 153 acquires an actual distance d to the camera at the time of imaging the object shown in the region of interest A on the basis of the distance information 171a stored in the storage unit 170.

In a case where the distance information corresponding to the region of interest A is uniform, the distance information is set as the actual distance d.

In a case where there is a plurality of pieces of distance information corresponding to the region of interest A, the distance information corresponding to a specific point in the region of interest A is set as the actual distance d. The specific point is the center of the region of interest A, a point closest to the camera in the region of interest A, a point having the highest saliency and visual attraction, or the like. Furthermore, an average value of the distance information corresponding to the region of interest A or a weighted average value weighted by saliency or the like may be set as the actual distance d.

Furthermore, in a case where there is no distance information corresponding to the region of interest A, the distance information of a neighboring area may be acquired, or depth information estimated on the basis of the line-of-sight directions and the convergence angle of both eyes of the user 10 may be acquired as the distance information.

In step S15, as illustrated in C of Fig. 11, the radius setting unit 153 changes the size of the omnidirectional image such that the radius r of the omnidirectional image matches the actual distance d with the viewpoint position U as the center. For example, the radius r of the omnidirectional image increases as the distance information of the object that is the region of interest A increases. In the example in C of Fig. 11, the omnidirectional image is enlarged, but the radius r of the omnidirectional image may be changed so that the omnidirectional image is reduced according to the acquired actual distance d.

The timing at which the radius r of the omnidirectional image is changed may be a timing at which the region of interest A is changed (the line-of-sight of the user 10 moves) or a timing at which the head (viewpoint position) of the user 10 moves in the real space. Furthermore, in a configuration in which the position of the virtual camera is controlled by a VR controller or the like, the radius r of the omnidirectional image may be changed at the timing when the virtual camera moves.

In a case where the viewpoint position U of the user 10 goes out of the omnidirectional image due to a change (enlargement or reduction) in the size of the omnidirectional image or the movement of the user 10, the omnidirectional image may be moved in conjunction with the position of the virtual camera so that the viewpoint position U of the user 10 falls within the omnidirectional image. In this case, the omnidirectional image may be made non-viewable by increasing the transmittance or decreasing the brightness in the omnidirectional image.

Note that, in a case where there is no distance information corresponding to the region of interest A, the radius r of the omnidirectional image may not be changed.

Now, in step S15, when the radius r of the omnidirectional image is changed, in step S16, it is determined whether or not the user 10 ends the viewing of the omnidirectional image. In a case where it is determined that the user 10 does not end the viewing of the omnidirectional image, the processing proceeds to step S17.

In step S17, as illustrated in A of Fig. 11, the viewpoint position/line-of-sight direction acquisition unit 151 updates (newly acquires) the viewpoint position U and the line-of-sight direction V of the user 10 in the virtual space. Thereafter, the process returns to step S13, and the processing in step S13 and subsequent steps is repeated.

On the other hand, in step S16, in a case where it is determined that the user 10 ends the viewing of the omnidirectional image, the display processing of the omnidirectional image ends.

According to the above processing, even in a case where the user moves the head while viewing the omnidirectional image, the change in the appearance (the size and position of the image) of the region of interest conforms to the distance perceived from the omnidirectional image, and matches the appearance when the user moves the head in the real world. As a result, it is possible to provide a more natural viewing experience to the user who views the omnidirectional image without giving an uncomfortable feeling to the user.

### (Problem of first display processing)

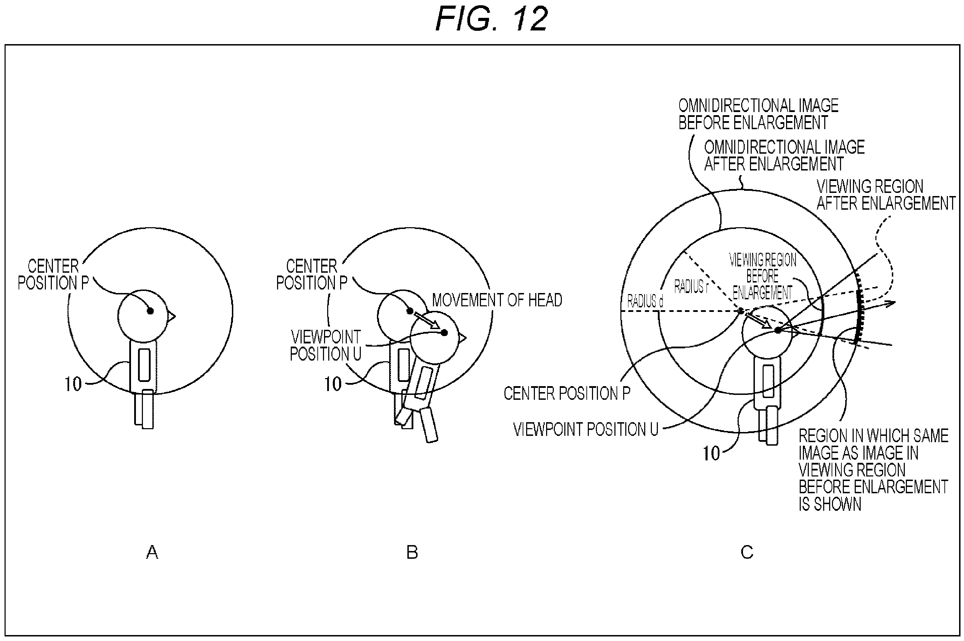

In the above-described first display processing, as illustrated in A of Fig. 12, the omnidirectional image is presented with the viewpoint position U of the user 10 as the center position P.

However, as illustrated in B of Fig. 12, in a case where the size of the omnidirectional image is changed in a state where the viewpoint position U of the user 10 is moved by the movement of the head of the user 10, the viewing region of the user 10 in the omnidirectional image changes.

Specifically, as illustrated in C of Fig. 12, in a case where the viewpoint position U of the user 10 moves, when the omnidirectional image is enlarged so that the radius r of the omnidirectional image matches the actual distance d, an image different from the image in the viewing region before enlargement is shown in the enlarged viewing region indicated by a dotted line in the drawing.

### <5. Second display example of omnidirectional image>

### (Second display processing)

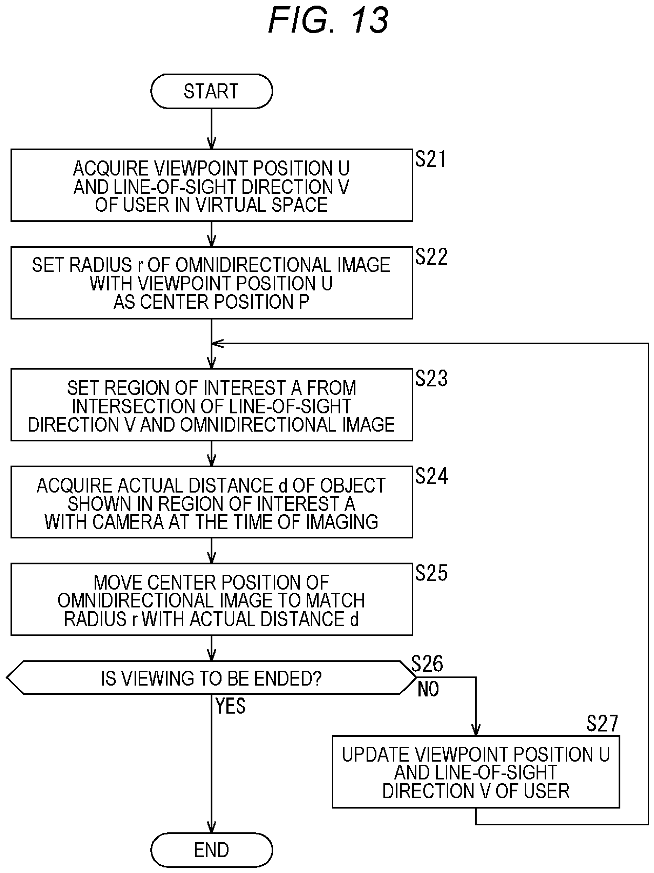

Here, with reference to the flowchart of Fig. 13, the second display processing of the omnidirectional image in which the radius of the omnidirectional image is changed such that the viewing region of the user becomes the same before and after the movement of the viewpoint position in a case where the viewpoint position is moved from the center position of the omnidirectional image will be described. The processing of Fig. 13 is also performed when the user 10 wearing the HMD 100 on the head starts viewing the omnidirectional image.

Note that the processing of steps S21 to S24, S26, and S27 of the flowchart of Fig. 13 is similar to the processing of steps S11 to S14, S16, and S17 of the flowchart of Fig. 10, respectively, and thus description thereof is omitted.

That is, after the actual distance d to the camera at the time of imaging the object shown in the region of interest A is acquired in step S24, in step S25, the radius setting unit 153 moves the center position of the omnidirectional image and makes the radius r of the omnidirectional image match the actual distance d.

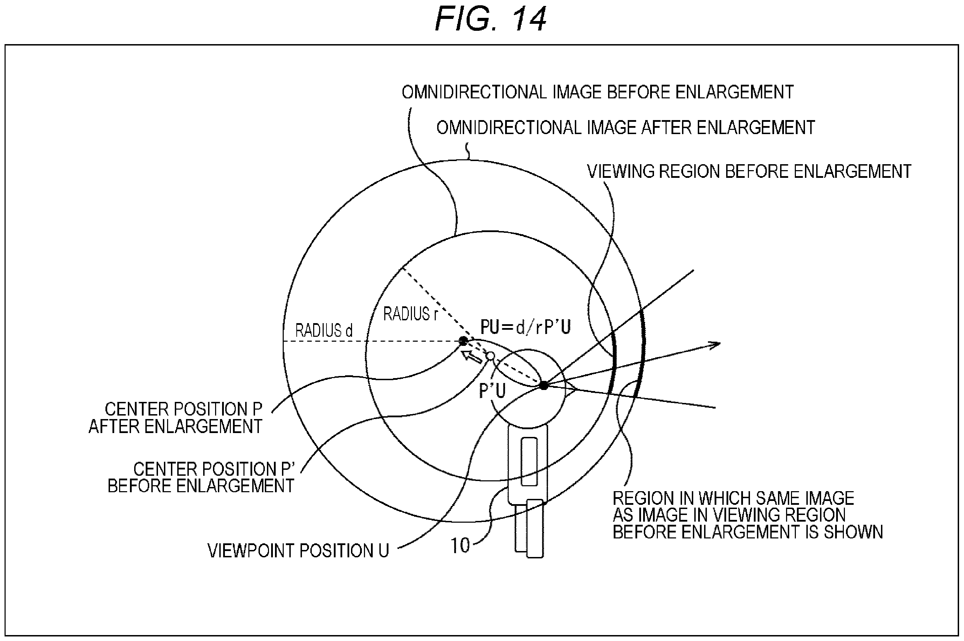

Specifically, as illustrated in Fig. 14, when the center position P' of the omnidirectional image before enlargement, the center position P of the omnidirectional image after enlargement, and the viewpoint position U of the user 10 are set, the radius setting unit 153 matches the radius r of the omnidirectional image with the actual distance d such that PU = d/rP'U is satisfied. Here, PU represents a distance (vector) from P to U, and P'U represents a distance (vector) from P' to U.

For example, the distance from the viewpoint position U to all points on the omnidirectional image is multiplied by d/r with the viewpoint position U of the user 10 as a reference. Therefore, the center position P of the omnidirectional image after enlargement moves to a position obtained by multiplying the distance from the viewpoint position U to the center position P' of the omnidirectional image before enlargement by d/r. As a result, PU = d/rP'U is satisfied.

Furthermore, the PU is obtained from PU = d/rP'U using the center position P' of the omnidirectional image before enlargement and the viewpoint position U of the user 10. Then, the center position P' of the omnidirectional image before enlargement is moved to a position U-PU with the viewpoint position U of the user 10 as a reference, and the radius r of the omnidirectional image is changed to the actual distance d.

Although the example in which the omnidirectional image is enlarged has been described above, also in a case where the omnidirectional image is reduced, the center position of the omnidirectional image is moved and the radius of the omnidirectional image is changed in a similar manner.

According to the above processing, even in a case where the viewpoint position U of the user 10 moves, the size of the omnidirectional image is changed with the viewpoint position U after the movement as a reference. Therefore, as illustrated in Fig. 14, the viewing region of the user 10 in the omnidirectional image can be prevented from being changed. As a result, it is possible to provide a more natural viewing experience to the user who views the omnidirectional image without giving an uncomfortable feeling to the user.

### (Problem of second display processing)

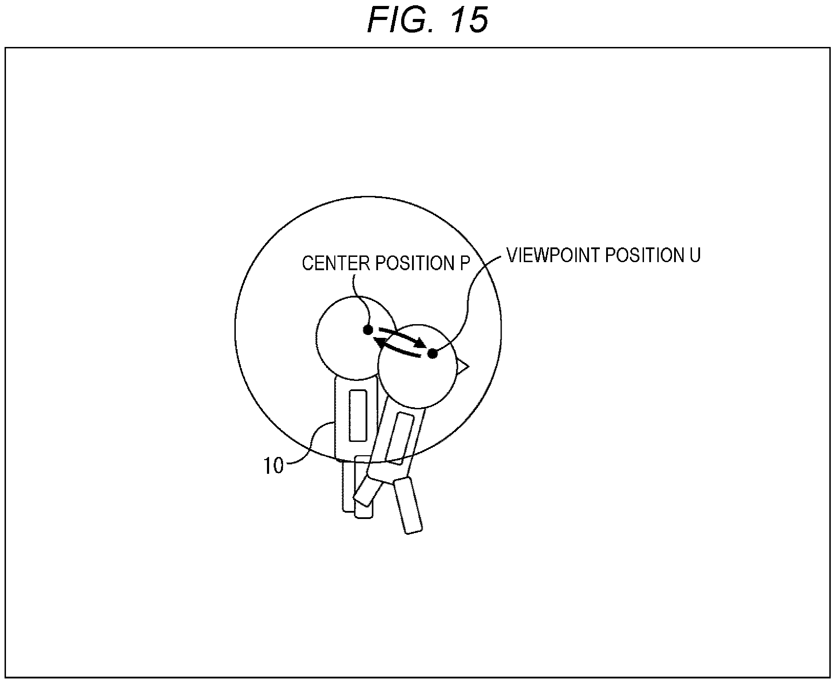

As illustrated in Fig. 15, even in a case where the viewpoint position U of the user 10 moves during viewing of the omnidirectional image, it is desirable that the viewpoint position U returns to the original position by the movement in the opposite direction of the same distance so that the same omnidirectional image as that before the movement can be viewed.

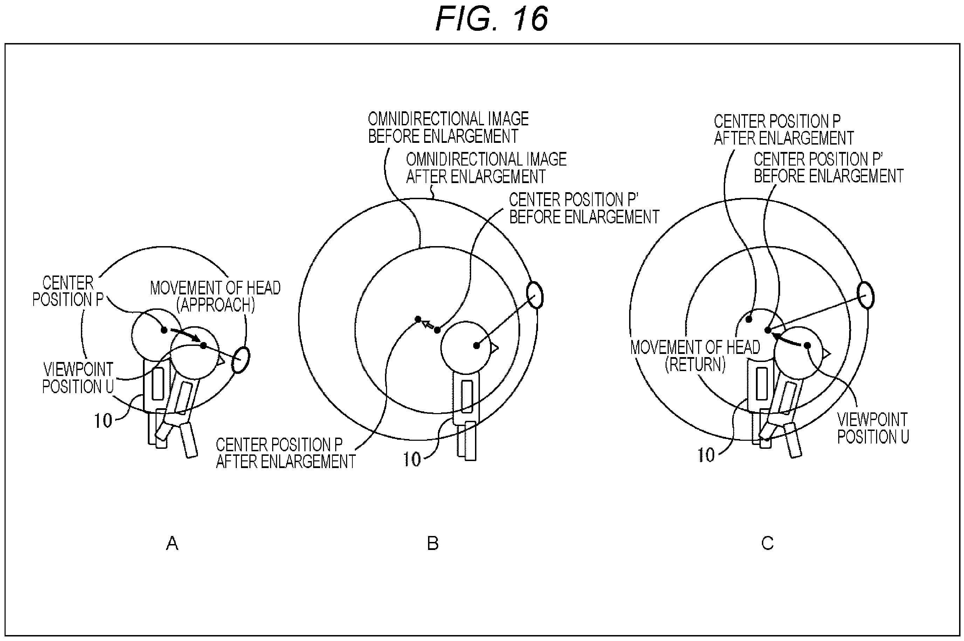

However, in the above-described second display processing, in a case where the size of the omnidirectional image is changed in a state where the viewpoint position U of the user 10 has moved as illustrated in A of Fig. 16, the center position of the omnidirectional image moves from P' to P as illustrated in B of Fig. 16.

From this state, as illustrated in C of Fig. 16, even if the viewpoint position U of the user 10 returns to the center position P' of the omnidirectional image before enlargement, the user 10 cannot view the same omnidirectional image as before the movement.

### <6. Third display example of omnidirectional image>

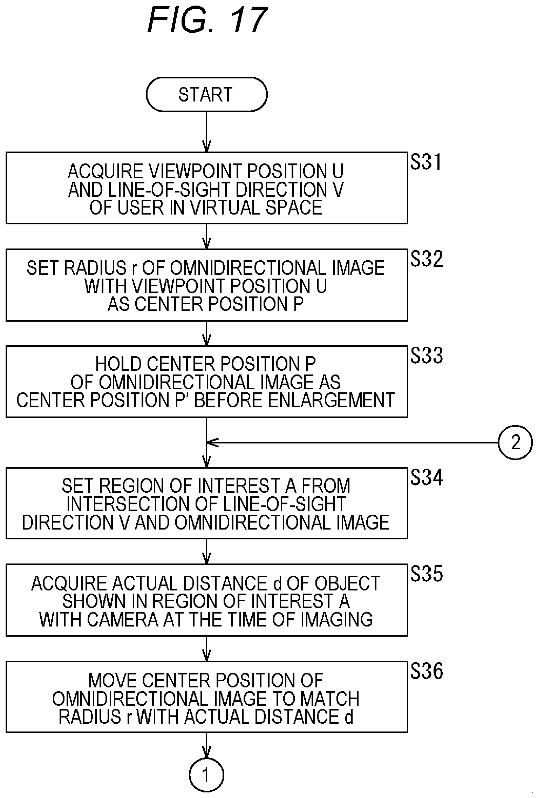

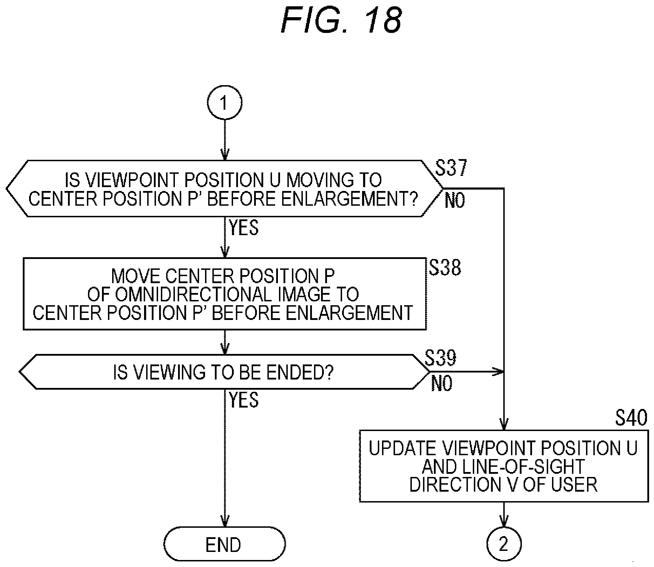

Here, with reference to the flowcharts in Figs. 17 and 18, third display processing of the omnidirectional image in which, in a case where the viewpoint position moves toward the center position of the omnidirectional image before the movement, the center position of the omnidirectional image after the radius is changed is moved to the center position of the omnidirectional image before the movement will be described. The processing of Figs. 17 and 18 is also performed when the user 10 wearing the HMD 100 on the head starts viewing the omnidirectional image.

Note that the processing of steps S31, S32, S34 to S36, S39, and S40 in the flowcharts of Figs. 17 and 18 is similar to the processing of steps S21 to S27 in the flowchart of Fig. 13, respectively, and thus the description thereof will be omitted.

That is, after the radius r of the omnidirectional image is set with the viewpoint position U of the user 10 as the center position P in step S32, in step S33, the radius setting unit 153 holds the center position P of the omnidirectional image as the center position P' before enlargement.

Thereafter, in step S36, the center position P of the omnidirectional image moves and the radius r of the omnidirectional image changes to the actual distance d, and then in step S37, the radius setting unit 153 determines whether or not the viewpoint position U of the user 10 is moving toward the center position P' before enlargement.

For example, in a case where the change amount per unit time in the distance between the viewpoint position U of the user 10 and the center position P' before enlargement is equal to or greater than a predetermined amount, it is determined that the viewpoint position U is moving toward the center position P'. Furthermore, it may be determined that the viewpoint position U is moving toward the center position P' in a case where the distance between the viewpoint position U of the user 10 and the center position P' before enlargement is equal to or less than a predetermined distance. Moreover, it may be determined that the viewpoint position U is moving toward the center position P' in a case where the operation of pulling the head is detected by the gesture determination using the machine learning on the basis of the orientation of the face of the user 10 and the movement amount and movement direction of the viewpoint position U of the user 10.

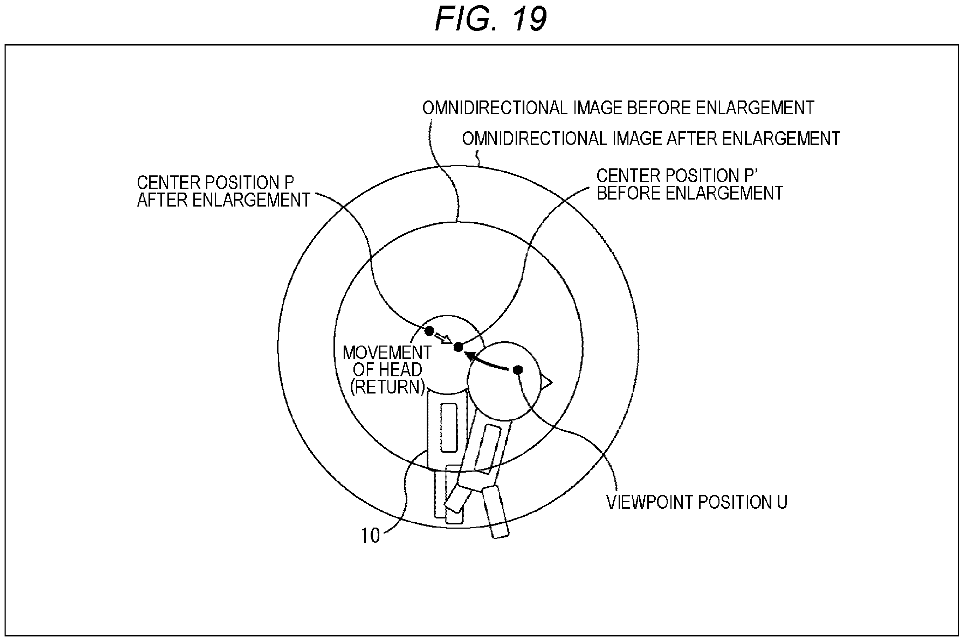

As illustrated in Fig. 19, in a case where it is determined that the viewpoint position U is moving toward the center position P', the processing proceeds to step S38, and the radius setting unit 153 moves the center position P of the omnidirectional image to the center position P' before enlargement.

In the movement of the center position of the omnidirectional image, the movement speed may be controlled. For example, the center position of the omnidirectional image may move at a predetermined constant speed, or the speed may change during the movement, such as slowly moving at the start or end of the movement. Moreover, the center position of the omnidirectional image may move at a speed according to the movement speed of the head of the user 10.

Furthermore, the center position of the omnidirectional image may move according to the viewpoint position U of the user 10. For example, as the viewpoint position U approaches the center position P' before enlargement, the center position P after enlargement may approach the center position P' before enlargement. Specifically, when the distance between the viewpoint position U and the center position P' before enlargement is halved, the distance between the center position P after enlargement and the center position P' before enlargement may be changed at the same ratio as the distance between the viewpoint position U and the center position P' before enlargement, for example, the distance between the center position P after enlargement and the center position P' before enlargement is halved. Furthermore, by weighting the distance between the viewpoint position U and the center position P' before enlargement, the movement amount of the center position P after enlargement may be increased as the viewpoint position U approaches the center position P' before enlargement.

On the other hand, in a case where it is determined in step S37 that the viewpoint position U is not moving toward the center position P', the processing proceeds to step S40, and after the viewpoint position U and the line-of-sight direction V of the user 10 are updated, the processing returns to step S34.

According to the above processing, it is possible to avoid accumulation of the deviation of the center position of the omnidirectional image, which occurs in a case where the viewpoint position U of the user 10 moves. As a result, when the viewpoint position U of the user 10 returns to the center position P' of the omnidirectional image before enlargement, the user 10 can view the same omnidirectional image as before the movement.

### <7. Computer configuration example>

The series of processing described above can be also performed by hardware or can be performed by software. In a case where a series of processing is performed by software, a program constituting the software is installed in a computer. Here, the computer includes a computer incorporated in dedicated hardware and a general-purpose personal computer capable of executing various functions by installing various programs, for example, and the like.

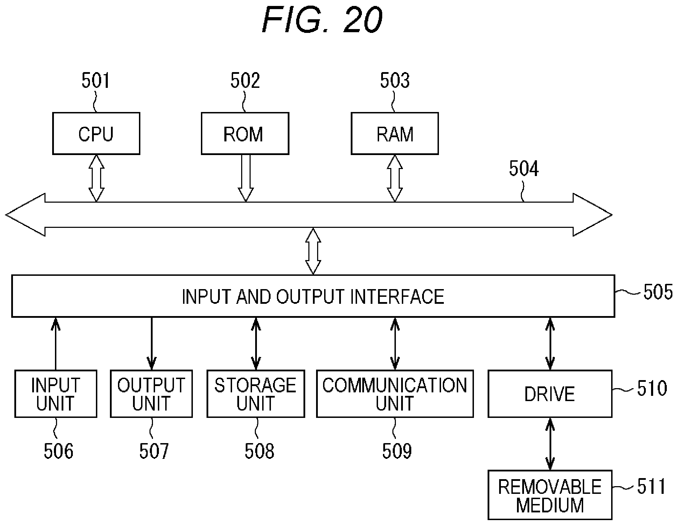

Fig. 20 is a block diagram showing a configuration example of a hardware of a computer that executes the above-described series of processing by a program.

In a computer, a CPU 501, a read only memory (ROM) 502, and a random access memory (RAM) 503 are mutually connected by a bus 504.

An input and output interface 505 is further connected to the bus 504. An input unit 506, an output unit 507, a storage unit 508, a communication unit 509, and a drive 510 are connected to the input and output interface 505.

The input unit 506 includes a keyboard, a mouse, a microphone, and the like. The output unit 507 includes a display, a speaker, and the like. The storage unit 508 includes a hard disk, a nonvolatile memory, and the like. The communication unit 509 includes a network interface and the like. The drive 510 drives a removable medium 511 such as a magnetic disk, an optical disk, a magneto-optical disk, or a semiconductor memory.

In the computer configured as described above, for example, the CPU 501 loads the program stored in the storage unit 508 into the RAM 503 via the input and output interface 505 and the bus 504, and executes the program, so that the above-described series of processing is performed.

The program executed by the computer (CPU 501) can be provided by being recorded on the removable medium 511 as a package medium or the like, for example. Furthermore, the program can be provided via a wired or wireless transmission medium such as a local area network, the Internet, or digital satellite broadcasting.

In the computer, a program can be installed in the storage unit 508 via the input and output interface 505 by mounting the removable medium 511 to the drive 510. Furthermore, the program can be received by the communication unit 509 via a wired or wireless transmission medium and installed in the storage unit 508. In addition, the program can be installed in the ROM 502 or the storage unit 508 in advance.

Note that the program executed by the computer may be a program of processing in chronological order according to the order described in the present specification or may be a program of processing in parallel or at necessary timing such as when a call is made.

The embodiments of the present disclosure are not limited to the above-described embodiments, and various modifications are possible without departing from the gist of the present disclosure.

The effects described in the present specification are merely examples and are not intended to be limiting, and other effects may be provided.

Moreover, the present disclosure can adopt the following configuration.
(1) An information processing apparatus including
   a control unit that controls display of a two-dimensional image including a plurality of objects having distance information in a three-dimensional coordinate system with a viewpoint position of a user as a reference,
   in which the control unit controls a display magnification of the two-dimensional image corresponding to a movement amount of the viewpoint position in a real space on the basis of the distance information of the objects that is a region of interest of the user.
(2) The information processing apparatus according to (1),
   in which a first object and a second object have different pieces of the distance information, and
   the control unit varies a change amount of the display magnification between a case where the region of interest is the first object and a case where the region of interest is the second object.
(3) The information processing apparatus according to (2),
   in which, in a case where the second object has the distance information larger than the distance information of the first object, when the region of interest is the second object, the control unit decreases the change amount of the display magnification as compared with a case where the region of interest is the first object.
(4) The information processing apparatus according to any one of (1) to (3),
   in which the two-dimensional image is an omnidirectional image, and
   the control unit controls the display magnification of the omnidirectional image corresponding to the movement amount of the viewpoint position by changing a radius of the omnidirectional image on the basis of the distance information of the object that is the region of interest.
(5) The information processing apparatus according to (4),
   in which the distance information is an actual distance between a camera and the object at time of imaging the omnidirectional image, and
   the control unit matches the radius of the omnidirectional image with the actual distance to the object in which the region of interest is present.
(6) The information processing apparatus according to (5),
   in which the control unit changes the radius of the omnidirectional image with the viewpoint position as a center.
(7) The information processing apparatus according to (6),
   in which, in a case where the viewpoint position is moved from a center position of the omnidirectional image, the control unit changes the radius of the omnidirectional image such that a viewing region of the user becomes the same before and after movement of the viewpoint position.
(8) The information processing apparatus according to (7),
   in which the control unit moves the center position of the omnidirectional image on the basis of the viewpoint position after the movement to change the radius of the omnidirectional image.
(9) The information processing apparatus according to (8),
   in which, in a case where the viewpoint position moves toward the center position of the omnidirectional image before the movement, the control unit moves the center position of the omnidirectional image after the radius is changed to the center position of the omnidirectional image before the movement.
(10) The information processing apparatus according to any one of (1) to (9),
   in which the control unit sets the region of interest on the basis of an intersection of a line-of-sight direction of the user and the two-dimensional image.
(11) The information processing apparatus according to (10),
   in which the control unit sets a region in which the object including the intersection is shown in the two-dimensional image as the region of interest.
(12) The information processing apparatus according to any one of (1) to (11),
   in which the control unit changes the display magnification of the two-dimensional image at a timing when the region of interest changes.
(13) The information processing apparatus according to any one of (1) to (11),
   in which the control unit changes the display magnification of the two-dimensional image at a timing when the viewpoint position changes in the real space.
(14) The information processing apparatus according to any one of (1) to (13),
   in which the control unit causes a head mounted display (HMD) worn on a head of the user to display the two-dimensional image.
(15) The information processing apparatus according to (14),
   in which the viewpoint position is a position of the HMD.
(16) The information processing apparatus according to (14),
   in which the viewpoint position is a position based on a position of a lens of the HMD.
(17) An information processing method including:
   by an information processing apparatus,
   controlling display of a two-dimensional image including a plurality of objects having distance information in a three-dimensional coordinate system with a viewpoint position of a user as a reference; and
   controlling a display magnification of the two-dimensional image corresponding to a movement amount of the viewpoint position in a real space on the basis of the distance information of the objects that is a region of interest of the user.
(18) A computer-readable recording medium in which a program is recorded, the program configured to cause execution of processing of:
   controlling display of a two-dimensional image including a plurality of objects having distance information in a three-dimensional coordinate system with a viewpoint position of a user as a reference; and
   controlling a display magnification of the two-dimensional image corresponding to a movement amount of the viewpoint position in a real space on the basis of the distance information of the objects that is a region of interest of the user.

### REFERENCE SIGNS LIST

- 50: Information processing apparatus
- 51: Control unit
- 52: Storage unit
- 60: Display device
- 100: HMD
- 121: CPU
- 122: Memory
- 123: Sensor unit
- 124: Input unit
- 125: Output unit
- 126: Communication unit
- 150: Control unit
- 160: Sensor unit
- 170: Storage unit
- 180: Display unit
- 151: Line-of-sight position/line-of-sight direction acquisition unit
- 152: Head position and posture acquisition unit
- 153: Radius setting unit
- 154: Region-of-interest setting unit
- 155: Display control unit
- 171: Omnidirectional image
- 171a: Distance information

## Claims

1. An information processing apparatus comprising
a control unit that controls display of a two-dimensional image including a plurality of objects having distance information in a three-dimensional coordinate system with a viewpoint position of a user as a reference,
wherein the control unit controls a display magnification of the two-dimensional image corresponding to a movement amount of the viewpoint position in a real space on a basis of the distance information of the objects that is a region of interest of the user.

2. The information processing apparatus according to claim 1,
wherein a first object and a second object have different pieces of the distance information, and
the control unit varies a change amount of the display magnification between a case where the region of interest is the first object and a case where the region of interest is the second object.

3. The information processing apparatus according to claim 2,
wherein, in a case where the second object has the distance information larger than the distance information of the first object, when the region of interest is the second object, the control unit decreases the change amount of the display magnification as compared with a case where the region of interest is the first object.

4. The information processing apparatus according to claim 1,
wherein the two-dimensional image is an omnidirectional image, and
the control unit controls the display magnification of the omnidirectional image corresponding to the movement amount of the viewpoint position by changing a radius of the omnidirectional image on a basis of the distance information of the object that is the region of interest.

5. The information processing apparatus according to claim 4,
wherein the distance information is an actual distance between a camera and the object at time of imaging the omnidirectional image, and
the control unit matches the radius of the omnidirectional image with the actual distance to the object in which the region of interest

6. The information processing apparatus according to claim 5,
wherein the control unit changes the radius of the omnidirectional image with the viewpoint position as a center.

7. The information processing apparatus according to claim 6,
wherein, in a case where the viewpoint position is moved from a center position of the omnidirectional image, the control unit changes the radius of the omnidirectional image such that a viewing region of the user becomes the same before and after movement of the viewpoint position.

8. The information processing apparatus according to claim 7,
wherein the control unit moves the center position of the omnidirectional image on a basis of the viewpoint position after the movement to change the radius of the omnidirectional image.

9. The information processing apparatus according to claim 8,
wherein, in a case where the viewpoint position moves toward the center position of the omnidirectional image before the movement, the control unit moves the center position of the omnidirectional image after the radius is changed to the center position of the omnidirectional image before the movement.

10. The information processing apparatus according to claim 1,
wherein the control unit sets the region of interest on a basis of an intersection of a line-of-sight direction of the user and the two-dimensional image.

11. The information processing apparatus according to claim 10,
wherein the control unit sets a region in which the object including the intersection is shown in the two-dimensional image as the region of interest.

12. The information processing apparatus according to claim 1,
wherein the control unit changes the display magnification of the two-dimensional image at a timing when the region of interest changes.

13. The information processing apparatus according to claim 1,
wherein the control unit changes the display magnification of the two-dimensional image at a timing when the viewpoint position changes in the real space.

14. The information processing apparatus according to claim 1,
wherein the control unit causes a head mounted display (HMD) worn on a head of the user to display the two-dimensional image.

15. The information processing apparatus according to claim 14,
wherein the viewpoint position is a position of the HMD.

16. The information processing apparatus according to claim 14,
wherein the viewpoint position is a position on a basis of a position of a lens of the HMD.

17. An information processing method comprising:
by an information processing apparatus,
controlling display of a two-dimensional image including a plurality of objects having distance information in a three-dimensional coordinate system with a viewpoint position of a user as a reference; and
controlling a display magnification of the two-dimensional image corresponding to a movement amount of the viewpoint position in a real space on a basis of the distance information of the objects that is a region of interest of the user.

18. A computer-readable recording medium in which a program is recorded, the program configured to cause execution of processing of:
controlling display of a two-dimensional image including a plurality of objects having distance information in a three-dimensional coordinate system with a viewpoint position of a user as a reference; and
controlling a display magnification of the two-dimensional image corresponding to a movement amount of the viewpoint position in a real space on a basis of the distance information of the objects that is a region of interest of the user.
